(19) Europäisches Patentamt
European Patent Office
Office européen des brevets

(11) Veröffentlichungsnummer: **0 289 918**
**A1**

(12) # EUROPÄISCHE PATENTANMELDUNG

(21) Anmeldenummer: **88106695.5**

(22) Anmeldetag: **27.04.88**

(51) Int. Cl.4: **C04B 35/00 , C04B 35/18 , C04B 35/10 , C04B 35/48**

(30) Priorität: **08.05.87 DE 3715278**

(43) Veröffentlichungstag der Anmeldung:
**09.11.88 Patentblatt 88/45**

(84) Benannte Vertragsstaaten:
**DE FR GB**

(71) Anmelder: **BASF Aktiengesellschaft**
**Carl-Bosch-Strasse 38**
**D-6700 Ludwigshafen(DE)**

(72) Erfinder: **Sterzel, Hans-Josef, Dr.**
**Wasgauring 3**
**D-6701 Dannstadt-Schauernheim(DE)**

(54) **Verfahren zur Herstellung kompakter, kristalliner und porenfreier Formkörper aus Oxidkeramik.**

(57) Bei der Herstellung kompakter, kristalliner und porenfreier Formkörper aus Oxidkeramik geht man aus von amorphen Oxidpulvern der Elemente Baryllium, Magnesium, Aluminium, Bor, Zirkonium, Thorium und Silicium oder den Mischoxiden des Siliciums mit diesen Elementen, in denen der Sauerstoff teilweise durch gebundenen Stickstoff ersetzt ist. Diese amorphen Stickstoff gebunden enthaltenen amorphen Oxidpulver werden in einer ersten Stufe bei Temperaturen oberhalb der Glaserweichungstemperatur aber unterhalb der Kristallisationstemperatur zu einem glasigen Formkörper verpreßt und dieser anschließend in einer zweiten Stufe auf Temperaturen oberhalb der Kristallisationstemperatur erhitzt. Im Falle der Einzeloxide sind 5 bis 30 %, im Falle der Mischoxide des Silicium mit diesen Elementen 50 bis 90 % des Sauerstoffs durch gebundenen Stickstoff ersetzt.

EP 0 289 918 A1

# Verfahren zur Herstellung kompakter, kristalliner und porenfreier Formkörper aus Oxidkeramik

Die vorliegende Erfindung betrifft ein Verfahren zur Herstellung kompakter, porenfreier und kristalliner Formkörper aus Oxidkeramik.

Unter Oxidkeramik werden Sinterwerkstoffe aus reinen, hochschmelzenden Metalloxiden verstanden, die im wesentlichen nur aus einer einzigen kristallinen Phase bestehen. Im Gegensatz dazu bestehen die herkömmlichen Keramikwerkstoffe, z.B. Porzellan, aus mehreren kristallinen Phasen, die in einer glasigen amorphen Phase eingebettet sind (Ullmann, Encyklopädie der technischen Chemie, Band 17, 1977, Seiten 515-529).

Formkörper aus Oxidkeramik werden dadurch hergestellt, daß man die Oxidpulver mit organischen Hilfsmitteln wie Tensiden, Wachsen, duro- oder thermoplastischen Polymeren und gegebenenfalls Sinterhilfsmitteln -anteigt, die fließfähige Masse in eine Form preßt, aus dem so erhaltenen Grünling die organischen Additive herausbrennt und die Formteile anschließend bei erhöhten Temperaturen, gegebenenfalls unter Druck, sintert. Dazu wurden die verschiedensten Sinterverfahren entwickelt wie Heißpressen, heißisostatisches Pressen und bevorzugt das drucklose Sintern.

Unter Heißpressen versteht man die gleichzeitige Anwendung von Druck und Temperatur. Nachteilig dieses an sich schon aufwendigen Verfahrens ist, daß nur Formkörper mit einfacher Geometrie hergestellt werden können, welche zur Erzielung der Maßhaltigkeit mit Diamantwerkzeugen nachbearbeitet werden müssen.

Beim heißisostatischen Pressen wird das Formteil bei der Sintertemperatur unter dem hohen Gasdruck eines inerten Gases allseitig verdichtet. Zweckmäßigerweise kombiniert man das Heißpressen mit dem heißisostatischen Pressen, indem das Heißpressen soweit durchgeführt wird, bis die äußeren Poren geschlossen sind und der Formkörper anschließend heißisostatisch weitergesintert werden kann.

Oxidkeramische Formteile werden meist drucklos gesintert. Ein Nachteil der Sinterverfahren besteht darin, daß aufgrund der hohen Schwindung, sie kann linear bis zu 18 % betragen, die Maßhaltigkeit nur relativ gering ist.

Werden zum Sintern Hilfsstoffe eingesetzt, so reagieren diese mit der Oberfläche der oxidkeramischen Pulver und bilden dort eine unter den Sinterbedingungen flüssige Glasphase. Beim Abkühlen bleibt diese intergranulare Glasphase erhalten und bewirkt durch ihre relativ niedrige Erweichungstemperatur eine Absenkung der Festigkeit des Formkörpers oberhalb dieser Erweichungstemperatur. Außerdem wird durch die Glasphase das unterkritische Rißwachstum unter Last gefördert und damit die Lebensdauer des Formkörpers verkürzt.

Zur Herstellung der Rohlinge oder Grünlinge kommen im allgemeinen mehrere Verfahren in Betracht:

Für Stückzahlen in mittlerer Größe wird das keramische Schlickergießverfahren angewendet. Bei diesem wird das Ausgangspulver mit einer Flüssigkeit zu einem Schlicker vermengt, der, in eine poröse Form gegossen, diese ausfüllt. Durch Entzug der Flüssigkeit in der Form entsteht der keramische Rohling. Die keramische Gießform ist mit relativ wenig Aufwand herzustellen.

Für große Serien wird das automatische Trockenpreßverfahren oder das Spritzgießverfahren eingesetzt. Beide benötigen aufwendige Werkzeuge, arbeiten aber mit sehr kurzen Taktzeiten. Für komplexe Formen wird das Spritzgießen verwendet. Hierzu wird die Masse mit thermoplastischen Kunststoffen und/oder Wachsen versetzt, in einer geeigneten Maschine erhitzt und in die Form gepreßt, in der der Kunststoff aushärtet. Das Verfahren bedarf eines weiteren Schrittes, und zwar der Beseitigung des Kunststoffes durch Pyrolysieren. Dieser Prozeß erschwert das Verfahren wesentlich, vor allem bei den Produkten, welche keinen Kohlenstoff enthalten dürfen. Das Pyrolysieren erfolgt bei steigender Temperatur bis zu 500°C und kann je nach Wanddicken bis zu mehreren Tagen benötigen.

Das Spritzgußverfahren weist jedoch auch gravierende Nachteile auf: Die abrassive keramische Masse löst an den Metalloberflächen von Zylinder, Schnecke und Form Späne ab, die in der Masse verbleiben und beim Sintern Fehlstellen bilden. Zusätzlich werden, durch die Scherung der Masse bedingt, beim Einspritzen in die Form Materialspannungen erzeugt, die bei der nachfolgenden Wärmebehandlung zu Rissen führen können.

Ein wesentliches Problem bei der Herstellung keramischer Formkörper ist die Erreichung der Gleichmäßigkeit innerhalb eines Stückes und von Stück zu Stück. Inhomogenitäten bewirken bei diesen plastisch nicht verformbaren Stoffen sofort Spannungen, welche die Festigkeit beeinflussen.

Wegen der Inhomogenitäten und Mikrorisse mit Dimensionen von 10 bis 80 µm gelang es bisher nicht, hochbelastbare keramische Formkörper herzustellen, deren Festigkeitswerte, insbesondere bei hohen Temperaturen, innerhalb konstruktiv zulässiger Grenzen konstant sind. Für den praktischen Einsatz ist dies umso bedeutungsvoller, als es noch keine praxisorientierte zuverlässige zerstörungsfreie Prüfverfahren gibt, die eine Aussonderung der ungeeigneten Formteile ermöglichen.

Aus der DE-OS 35 04 145 ist es bekannt, zur

Hestellung kompakter, kristalliner porenfreier Formkörper aus Siliciumnitrid von amorphem Siliciumnitridpulver auszugehen, dieses in einer ersten Stufe bei Temperaturen von 1200 bis 1350°C und Drücken von 50 bis 600 kp/cm$^2$ zu einem glasigen Formkörper zu verpressen und in einer zweiten Stufe das Siliciumnitrid bei Temperaturen von 1400 bis 1800°C ohne Anwendung von Druck in kristallines Siliciumnitrid umzuwandeln.

Es ist auch aus Glass-Current Issues, 1985, Ed. by A.F. Wright und J. Dupuy, 1985, Martinus Nijhoff Publishers, Seiten 16-18, bekannt, bei der Herstellung von Gläsern gelartige bzw. amorphe Oxidpulver einzusetzen, wobei jedoch die noch nicht gelöste Schwierigkeit darin besteht, daß das bei erhöhten Temperaturen auftretende viskose Fließen mit einer Kristallisation konkurriert. Auf Seiten 49-53 der gleichen Veröffentlichung wird ausgeführt, daß die Verarbeitung solcher Pulver in der Nähe der Glaserweichungstemperatur, wo die Kristallisationsgeschwindigkeit infolge der hohen Temperatur niedrig ist, durchzuführen sei. Ganz allgemein gilt, daß mit steigender Temperatur die Viskosität abnimmt und die Kristallisationsgeschwindigkeit zunimmt (Science of Ceramic Chemical Processing, Ed. L.L. Hench und D.R. Ulrich, Verlag John Wiley & Sons, 1986, S. 173-183). Wie in Glass-Current Issues (loc.cit., Seiten 221-223) ausgeführt wird, ist für die Herstellung eines Glases durch Sintern eines Gels zu beachten, daß Zeit und Temperatur so aufeinander abgestimmt werden, daß noch keine Kristallisation eintritt.

Diese Forderung läßt sich aber häufig nicht realisieren, da bei einigen amorphen gelartigen Metalloxidpulvern die Temperatur, bei der ein viskoses Fließen und die Temperatur, bei der das amorphe Pulver zu kristallisieren beginnt, einander überlappen, d.h. daß eine Kristallisation beobachtet wird, bevor die Kompaktierung zu einem porenfreien amorphen Formkörper abgeschlossen ist.

Leider ist nicht nur die Viskosität der Gläser, sondern auch ihre Kristallisationsneigung stark von den Herstellungsbedingungen der Ausgangspulver abhängig. In "Material Research Symposium Proceedings" Vol. 73 (Better Ceramics Through Chemistry II), 1986, werden dazu einige Beispiele aufgeführt: Wird Aluminiumoxid durch Hydrolyse von Aluminium-propionat hergestellt und das erhaltene amorphe Pulver sofort in Vakuum getrocknet, so kristallisiert es bei 800°C zu $\alpha$-$Al_2O_3$. Wird dagegen das Reaktionsgemisch mit Ultraschall beschallt, so kristallisiert das amorphe Pulver bereits bei Raumtemperatur (Seite 565).

Dies gilt auch für Zirkondioxid mit einer Glaserweichungstemperatur um 1.700°C. Wird Zirkondioxid durch Hydrolyse aus Zirkonylnitrat oder Zirkonylchlorid hergestellt und das Reaktionsprodukt in der Reaktionslösung 72 h lang gealtert, so kristallisiert es bei knapp 100°C zu monoklinem Zirkondioxid (Seite 71). Wird das amorphe Zirkondioxid im Vakuum entwässert, so setzt die Kristallisation bei 400-450°C ein (Seite 121).

Titandioxid läßt sich aus der Hydrolyse von Titantetraethylat bei 25°C als amorphes Produkt herstellen (Seite 85). Bei 70°C ist es noch amorph, bei 370°C kristallisiert es zu Anatas (Seite 444) und dies weit unterhalb der Glaserweichungstemperatur von 1.000°C.

Amorphes Germaniumdioxid kristallisiert nach zwei Wochen Alterung in der Reaktionslösung. Dagegen kristallisiert eine rasch im Vakuum getrocknete Probe je nach Heizrate zwischen 630 bis 695°C und damit wie erwartet oberhalb der gemessenen Glaserweichungstemperatur von 600°C (Seite 446).

Nach der Sol-Gel-Technik hergestellter Mullit ist bis 1.150°C amorph. Er kristallisiert ab 1.200°C (Seite 121).

Damit ist gezeigt, daß die Verarbeitungsfenster bezüglich Temperatur und Zeit für die Verarbeitung von amorphen Oxidpulvern zu Glasformlingen entweder nicht existieren oder unpraktikabel sind.

Aus diesem Grunde lassen sich auch Oxidkeramiken nicht dadurch herstellen, daß man die amorphen Metalloxidpulver zu einem dichten, glasigen Formkörper versintert und diesen anschließend durch Erhöhung der Temperatur in einen kristallinen oxidkeramischen Formkörper überführt.

Es bestand somit die Aufgabe, das an sich erstrebenswerte Verfahren, aus amorphen Ausgangspulvern zunächst glasige, dichte Formkörper herzustellen und diese anschließend zu kristallisieren, so abzuwandeln, daß es in der Praxis verwendet werden kann.

Diese Aufgabe wird dadurch gelöst, daß man bei einem Verfahren zur Herstellung kompakter, kristalliner und porenfreier Formkörper aus Oxidkeramik durch Verpressen von amorphen Oxidpulvern bei Temperaturen oberhalb des Glaserweichungspunktes und unterhalb der Kristallisationstemperatur und anschließendes Erhitzen der erhaltenen glasigen kompakten Formkörper auf Temperaturen oberhalb der Kristallisationstemperatur als amorphe Oxidpulver die Oxide der Elemente Aluminium, Zirkonium und Silicium oder die Mischoxide des Siliciums mit diesen Elementen einsetzt, in denen der Sauerstoff teilweise durch in der Gelstruktur chemisch gebundenen Stickstoff ersetzt sind.

Mit derartigen Materialien wird das Verarbeitungsfenster bezüglich Temperatur und Zeit genügend groß, um sie oberhalb der Glaserweichungstemperatur zu dichten, glasigen Formkörpern zu pressen und anschließend zu kristallisieren. Der Kristallisationsprozeß kann gegebenenfalls unter Ausnutzung eines örtlichen Temperaturgradienten erfolgen. Die Ausgangspulver können gegebenenfalls mit bis zu 70 Vol.% anorganischen Fasern oder Whiskern zur Erhöhung von Steifigkeit, Festigkeit und Zähigkeit versetzt werden.

Die als Ausgangsverbindungen für das erfindungsgemäße Verfahren verwendeten amorphen Oxidpulver mit gebundenem Stickstoff werden in bekannter Weise aus amorphen Hydroxiden oder Oxidhydraten der Elemente Aluminium, Zirkonium und Silicium oder Mischoxiden des Siliciums mit diesen Elementen, insbesondere mit Aluminium hergestellt. Diese Oxide bzw. Hydroxidhydrat-Pulver können auch geringe Mengen an Beryllium, Magnesium, Yttrium und Bor enthalten. Besonders geeignete Oxidhydrate sind solche, die durch Hydrolyse der entsprechenden Metallalkoxide entstanden sind. Hierzu werden die Alkoxide in einem Alkohol wie Methanol, Ethanol, n-Propanol, n-Butanol oder i-Propanol gelöst. Diese Lösung läßt man unter heftigem Rühren langsam in ein Gefäß mit der ca. 10fachen Menge Wasser, bezogen auf die Alkoxid-Lösung laufen, wobei die Hydrolyse sowohl sauer, vorzugsweise mit Salzsäure, als auch alkalisch, vorzugsweise mit Ammoniak, katalysiert werden kann. Dabei fällt das amorphe Hydroxid oder Oxidhydrat aus. Die Hydrolyse kann durch Anheben der Wassertemperaturen bis 95°C beschleunigt werden.

Soll eine binäre Verbindung, beispielsweise Mullit ($3Al_2O_3 \bullet 2SiO_2$) hergestellt werden, so löst man die Alkoxide im erforderlichen molaren Verhältnis in dem Alkohol, z.B. in i-Propanol. Pro Mol der schneller hydrolysierenden Alkoxids, in diesem Fall das Aluminiumalkoxid läßt man unter Rühren eine Lösung von 1 Mol Wasser in i-Propanol zulaufen und kocht die Reaktionsmischung ca. 1 Stunde lang am Rückfluß. Bei der hierbei stattfindenden partiellen Hydrolyse werden in dem Alkohol lösliche Aluminiumsiloxane der Form

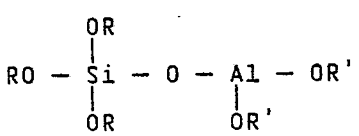

erhalten. Danach wird wie beschrieben die Hydrolyse vervollständigt (J.Phys.Chem. Solids 45, Nr. 10, Seite 1069, 1074).

Die amorphen Hydroxide oder Oxidhydrate werden von der Reaktionslösung abfiltriert oder abzentrifugiert. Zur Verbesserung des Filtrationsverhaltens können geringe Mengen, 0,0001 % bis 0,01 %, bezogen auf die Wassermenge, am hochmolekularen organischen wasserlöslichen Polymeren wie Polyacrylsäure, Polyacrylamid oder Copolymere zugesetzt werden. Anschließend wird das Material bei bis zu 50°C im Vakuum getrocknet. Bei größeren Mengen können die Hydroxide oder Oxidhydrate auch durch Sprühtrocknung in die Pulverform übergeführt werden. Das so getrocknete Pulver wird in einem Druckautoklaven überführt und dort einem Ammoniakstrom bei Ammoniakpartialdrucken von 1 bis 50 kp/cm$^2$ umgesetzt, wobei die Temperatur innerhalb von 1 bis 10 h auf 400 bis 1200°C erhöht wird. Dabei werden Hydroxyl- und Alkoxidreste durch Ammoniak substituiert, Aminogruppen eingebaut und über weitere Kondensation Silizium-und/oder Metallatome über Stickstoffatome verbunden (J. Am. Ceramic Soc. 66, Nr. 11 (1983), Seite 758).

Der Anteil des durch Stickstoff zu ersetzenden Sauerstoffs ist abhängig von den gewünschten Eigenschaften des Stickstoff enthaltenden amorphen Oxidpulvers, d.h. von der jeweils gewünschten Differenz zwischen der Temperatur des Glaserweichungspunktes und der Kristallisationstemperatur. Im Falle der Einzeloxide genügt es 5 bis 30 %, vorzugsweise 5 bis 20 % des Sauerstoffs durch Stickstoff zu ersetzen, um dieses Ziel zu erreichen. Bei den Mischoxiden des Siliciums, insbesondere den Mischoxiden des Siliciums mit Aluminium können auch höhere Substitutionsgrade von 50 bis 90 % eingehalten werden, womit die technisch interessante Klasse der $\beta'$-Sialone zugänglich wird.

Infolge der Substitution von Sauerstoff durch Stickstoff wird die Koordination der Metallatome erhöht. Dies bewirkt eine geringe Erhöhung von Glaserweichungstemperatur und Schmelzviskosität, die vor allem mit einer Erniedrigung der Kristallisationsgeschwindigkeit gekoppelt ist. Dagegen wird die Lage des Schmelzpunktes kaum beeinflußt und bei genügend langer Kristallisationszeit ein 100 % oder nahezu 100 % kristallines Material erhalten.

Damit wird das Ziel der Erfindung, die Herstellung glasiger Formteile aus amorphen Pulvern mit einem breiten Verarbeitungsfenster bezüglich Temperatur und Zeit, erreicht, d.h. daß zwischen Glaserweichungstemperatur und Kristallisationstemperatur bzw. der Temperatur bei der eine Kristallisation in Abhängigkeit von der Zeit in noch nicht nennenswertem Umfang stattfindet, ein genügend breiter Abstand liegt. Innerhalb dieses Temperaturbereiches lassen sich die amorphen, Stickstoff gebunden enthaltenden Pulver, durch Anwendung von Druck zu einem glasartigen Formkörper verpressen, und, da sie sich in diesem Temperaturbereich in einem fließfähigen Zustand befinden wird der Druck in der Formmasse gleichmäßig, auch in die entferntesten Teile der Form weitergeleitet. Dieser beim Sintern von kristallinen Oxiden nicht vorhandene Effekt führt beim erfindungsgemäßen Verfahren dazu, daß kompliziert gestaltete Formteile mittels einer Art Kolbenspritzgußmaschine in Produktionszyklen, die nur durch die Fließfähigkeit der

Formmasse begrenzt ist, in großer Stückzahl wirtschaftlich herstellbar sind.

Die Glaserweichungstemperatur eines erfindungsgemäß einzusetzenden Oxidpulvers kann dilatometrisch bestimmt werden, indem der thermische Ausdehnungskoeffizient $\alpha$ als Funktion der Temperatur gemessen wird. Der thermische Ausdehnungskoeffizient steigt mit steigender Temperatur gleichförmig an, um bei Erreichen der Glaserweichungstemperatur plötzlich stärker anzusteigen.

Die Glaserweichungstemperatur läßt sich auch nach der **D**ifferential- **S**canning- **C**alorimetry (DSC) bestimmen. Hiernach wird der einer Probe zugeführte Wärmestrom $H = \delta H/\delta T = cp$ als Funktion der Temperatur gemessen. Im Glaserweichungspunkt nimmt die spezifische Wärme sprunghaft zu, so daß in diesem Punkt eine Stufe in der Meßkurve registriert wird. Der Wendepunkt dieser Stufe gibt die Glaserweichungstemperatur an. Bei weiterer Temperatursteigerung wird der Kristallisationspunkt erreicht und die Meßkurve $H = f(T)$ beschreibt einen Peak, dessen Beginn den Kristallisationsbeginn und dessen Maximum die Kristallisationstemperatur angibt. Da die Meßwerte gewöhnlich von der Heizrate abhängig sind, wird die Heizrate - hier 48°C/min - mit angegeben.

In dem zweiten sich anschließenden Verfahrensschritt wird der amorphe, glasige Formkörper durch Kristallisation bei weiter erhöhter Temperatur in den eigentlichen keramischen Formkörper übergeführt. Diese Behandlung erfolgt zwar drucklos, sollte dennoch unter Formzwang erfolgen, um ein Verwinden des Formkörpers und damit einen Verlust der Maßhaltigkeit zu vermeiden. Dazu sind jedoch nur geringe Haltekräfte erforderlich. Der Formzwang ist auch notwendig, weil während der Aufheizphase bis zur Erreichung einer Mindestkristallinität von 5 bis 20 % aufgrund der erniedrigten Viskosität ein Fließen des Formkörpers erfolgen kann und so die Maßhaltigkeit nicht mehr gegeben ist.

Die Dauer der Kristallisation richtet sich nach der angestrebten Kristallmodifikation und der angewandten Temperatur und beträgt im allgemeinen etwa 10 bis 100 Minuten. Zur Erhöhung der Kristallisationsgeschwindigkeit und zur Festlegung der Kristallitgröße können in vorteilhafter Weise Nukleierungsmittel dem zu verarbeitenden amorphen Material zugegeben werden, falls es nicht ohnehin schon teilweise kristallin ist. Vorzugsweise wählt man als Nukleierungsmittel entsprechend feinteilige Teilchen mit der angestrebten Kristallstruktur des Formlings. Die Teilchengrößen der Nukleierungsmittel betragen 0,001 bis 1 $\mu$m, und sie werden in Konzentrationen von 0,0001 bis 1 Gew.% eingesetzt, so daß Keimzahlen von $10^9$ bis $10^{15}$ Keimen pro $cm^3$ erhalten werden.

Neben der Möglichkeit, absolut poren-und mikrorißfreie keramische Formkörper herzustellen, weist das erfindungsgemäße Verfahren noch einen gewichtigen Vorteil auf:

Wenn man die Kristallisation des Formkörpers in einem örtlichen Temperaturgradienten durchführt, gelingt eine gerichtete Kristallisation, die die Ausrichtung bestimmter kristallographischer Achsen in eine gewünschte Vorzugsrichtung gestattet. So ist es möglich, Kristallflächen, von denen bekannt ist, daß Druck-oder Reißfestigkeit in ihrer Richtung besonders groß sind, derart in den Formkörper zu legen, daß gerade diese Kristallflächen in Richtung der maximalen mechanischen Beanspruchung liegen.

Da die thermische Ausdehnung in den meisten Fällen anisotrop ist, d.h. die Kristallachsen sich verschieden stark ausdehnen, ist es von Vorteil, durch die gerichtete Kristallisation die Kristallachsen im Formteil so auszurichten, daß im Formteil die thermische Ausdehnung in gewünschte Richtungen gelenkt wird.

Ein weiterer Vorteil des erfindungsgemäßen Verfahrens ergibt sich bei der Herstellung von faser-und/oder whiskerverstärkter Formteile. Nach dem Stand der Technik werden die Fasern und/oder Whisker mit den Ausgangspulvern vermischt und dann der Grünling hergestellt. Dabei behindern die ausgedehnten Fasern oder Whisker die Kompaktierung, und es werden unerwünschte Poren erzeugt. Dies kann beim erfindungsgemäßen Verfahren nicht geschehen, weil das viskose Glas die Verstärkungsmittel umfließt. Werden Faser oder Whisker mit höherer Steifigkeit als sie die oxidkeramische Matrix aufweist eingesetzt, z.B. auf der Basis von Siliziumcarbid, so werden die Spannungen optimal auf die Fasern oder Whisker übertragen und gute Verbundeigenschaften erzielt. Der Anteil an Verstärkungsmitteln kann bis zu 70 Vol.% betragen.

Die nach der Erfindung hergestellten Formteile können als hochbelastbare Bauelemente Anwendung in Kolbenmotoren, Gasturbinen, Wärmetauschern, Abgasturboladern oder beispielsweise als Substrate für integrierte Schaltkreise finden.

Beispiel 1

383,2 g Zirkontetrabutylat werden in 1,2 l i-Propanol gelöst und diese Lösung in 10 l auf 40°C erwärmtes Wasser unter starkem Rühren zulaufen gelassen. Der pH-Wert des Wassers wurde durch Ammoniak-Zugabe auf 11 eingestellt. Nach der vollständigen Zugabe der Zirkontetrabutylat-Lösung wurde noch 1/2 h gerührt und danach das ausgefällte amorphe Zirkonoxidhydrat abgesaugt und mehrmals mit Wasser gewaschen. Das Material wurde bis 50°C und einem Druck von ca. 30 mbar über 20 h getrocknet. Wird dieses Material mit einer Heizrate von 4°C/min aufgeheizt, so gibt es oberhalb 100°C Wasser ab und beginnt bei 460°C zu kristallisieren.

50 g des amorphen Zirkondioxidhydrats werden in einen Autoklaven überführt, der von einem Ammoniakstrom von 500 ml Ammoniak/h durchströmt wird. Der Ammoniakdruck wird auf 20 bar gehalten. Über eine Zeit von 5 h wird der Autoklav linear mit der Zeit von Raumtemperatur auf 600°C aufgeheizt und danach noch 5 h bei 600°C gehalten. Das entstandene Wasser und Alkoholreste werden aus dem Ammoniakkreislauf auskondensiert.

Es wurde ein pulverförmiges amorphes Zirkondioxid erhalten, das einen Stickstoffgehalt von 1,3 Gew.% aufwies. Dementsprechend sind 8,5 % des Sauerstoffs im $ZrO_2$ durch Stickstoff ersetzt. Die Differentialthermoanalyse (Heizrate 4°C/min) zeigte, daß die Kristallisation erst bei ca. 2.000°C einsetzt, dagegen betrug die Glaserweichungstemperatur 1.780°C (bei einer Heizrate von 50°C/min), womit ein Verarbeitungsfenster von mindestens 200°C über eine Zeit von 1 h erhalten wurde.

Das Material wurde in einer Presse bei 1.950°C und einem Druck von 50 kp/cm² zu einer Scheibe mit den Maßen 16 mm Durchmesser und 10 mm Höhe innerhalb von 5 min verpreßt. Es waren keine Poren größer als 10 µm festzustellen. Die Scheibe wurde anschließend in einem Ofen bei 2.100°C innerhalb von 20 min vollständig kristallisiert.

Beispiel 2

Zur Herstellung von amorphem Aluminiumhydroxid wurden 204 g Aluminiumtriisopropylat (1 Mol), gelöst in 1 l i-Propanol, unter starkem Rühren in 5 l Wasser zulaufen gelassen. Die Reaktionstemperatur betrug 20°C, der pH-Wert war durch Ammoniak-Zugabe auf 9 eingestellt. Die Reaktionslösung wurde mit einem Labor-Sprühtrockner aufgearbeitet, wobei amorphes pulverförmiges Aluminiumhydroxid anfiel. Dieses Material wurde bei 50°C und einem Druck von ca. 30 mbar über 20 h getrocknet. Wird dieses Material mit einer Heizrate von 4°C/min aufgeheizt, so gibt es bei 100°C Wasser ab und beginnt bei ca. 350°C zu kristallisieren.

Ca. 100 g des amorphen Aluminiumhydroxids wurden in einen Autoklaven überführt und unter einem Ammoniakstrom von 300 ml Ammoniak/h über eine Zeit von 6 h linear von Raumtemperatur bis 1000°C unter Normaldruck aufgeheizt. Wasser und Alkoholreste wurden aus dem Ammoniakkreislauf auskondensiert.

Es wurde ein pulverförmiges amorphes Aluminiumoxid erhalten, das einen Stickstoffgehalt von 4,55 Gew.% aufwies. Dementsprechend sind 16 % des Sauerstoffs im Aluminiumoxid durch Stickstoff ersetzt.

Die Differentialthermoanalyse (Heizrate 4°C/min) zeigte, daß die Kristallisation erst bei ca. 1500°C einsetzt, während die Glaserweichungstemperatur, bei einer Heizrate von 50°C/min gemessen, ca. 1250°C beträgt.

Das Material wurde in einer Presse bei 1350°C und einem Druck von 40 kp/cm² zu einer Scheibe mit den Maßen 16 mm Durchmesser und 8 mm Höhe innerhalb von 4 min verpreßt. Es waren keine Poren größer als 5 µm festzustellen. Die Scheibe wurde anschließend in einem Ofen bei 1750°C innerhalb von 10 min vollständig kristallisiert.

Beispiel 3

Zur Herstellung von amorphem Mullit wurden 612 g Aluminiumtriisopropylat (3 Mole) und 416 g Siliziumtetraethylat (2 Mole) in 6 l i-Propanol gelöst. Unter Rühren wurden zu dieser Lösung 54 g Wasser (3 Mole), gelöst in 500 ml i-Propanol, zulaufen gelassen. Die Reaktionsmischung wurde 3 h bei 80°C gerührt. Danach wurde die Reaktionsmischung unter starkem Rühren in 70 l auf 50°C erwärmtem Wasser laufen gelassen, dessen pH-Wert mit Ammoniak auf 9 eingestellt war. Nach erfolgter Zugabe wurde noch 1/2 h gerührt und danach das ausgefallene Material abgesaugt, nochmals mit Wasser gewaschen und bei 60°C und ca. 25 mbar Druck über 20 h getrocknet. Die Differentialthermoanalyse gekoppelt mit der thermoprovimetrischen Analyse zeigte, daß dieses Material beim Aufheizen Wasser abgibt und bei 1.200°C kristallisiert (bei einer Heizrate von 4°C/min).

60 g des amorphen Materials wurden wie in Beispiel 1 in einen Autoklav überführt und mit Ammoniak behandelt. Bei einem Druck von 10 bar betrug der Ammoniakstrom 300 ml/h. Über eine Zeit von 4 h wurde linear auf 1.000°C aufgeheizt und das Material dann noch 4 h bei 1000°C gehalten. Wasser und Alkoholreste wurden aus dem Kreislauf auskondensiert. Es wurde ein amorpher Mullit erhalten, der 3,8 Gew.% Stickstoff enthielt, d.h. daß 13,3 % des Sauerstoffs durch Stickstoff ersetzt sind.

Die Differentialthermoanalyse (Heizrate 4°C/min) zeigte, daß die Kristallisation erst bei 1.540°C einsetzte; die Glaserweichungstemperatur betrug dagegen 1.340°C (Heizrate 50°C/min), womit ein Verarbeitungsfenster von ungefähr

200°C erhalten wurde.

Das nitridierte Material wurde in einer Presse bei 1.400°C und einem Druck von 45 kp/cm² innerhalb von 8 min zu einer Scheibe mit 16 mm Durchmesser und 9 mm Höhe verpreßt. Lichtoptisch waren keine Poren feststellbar. Die Scheibe wurde anschließend durcklos in einem Ofen bei 1.700°C innerhalb von 15 min vollständig kristallisiert.

Beispiel 4

Zur Herstellung eines Sialons wurden 326,7 g Siliziumtetraethylat (1,57 Mole) und 136,7 g Aluminiumtriisopropylat (0,67 Mole) in 4 l i-Propanol gelöst. Zu dieser Lösung wurde unter Rühren eine Mischung von 12,06 g Wasser (0,67 Mole) und 100 g i-Propanol zulaufen lassen und die Reaktionsmischung danach 2 h bei 80°C gerührt. Sodann wurde die Reaktionsmischung in 40 l Wasser, das auf 40°C erwärmt war und mit Ammoniak auf einen pH-Wert um 8,5 eingestellt war, unter starkem Rühren zulaufen gelassen. Nach 1 h weiteren Rührens wurde das ausgefallene Material abgesaugt, mehrmals mit Wasser gewaschen und danach bei 50°C und 30 mbar Druck über eine Zeit von 24 h getrocknet. Das amorphe Material wurde in einen Autoklav überführt und einem Ammoniakstrom ausgesetzt, aus dem Wasser und Alkoholreste auskondensiert wurden. Nach Erreichen von 200°C wurde der Ammoniakdruck auf 40 bar eingestellt und die Temperatur innerhalb von 3 h linear auf 600°C erhöht und das Material dann weiter 30 h bei 600°C belassen. Das so erhaltene amorphe Material enthielt 42 % Si, 17 % Al, 11 % O und 30 % N, entsprechend einem Ersatz von 82,5 % Sauerstoff durch Stickstoff. Die Glaserweichungstemperatur betrug nach DSC ca. 1.280°C (Heizrate 50°C/min), die Kristallisation setzte erst bei 1.600°C ein (Heizrate 4°C/min).

Das Material wurde in einer Heißpresse bei 1.550°C und einem Druck von 75 kp/cm² innerhalb von 8 min zu einer Scheibe mit 16 mm Durchmesser und 12 mm Höhe verpreßt. Lichtoptisch waren keine Poren feststellbar. Die Scheibe wurde bei 1.800°C in einem Ofen innerhalb von 4 min drucklos vollständig kristallisiert.

**Ansprüche**

1. Verfahren zur Herstellung kompakter, kristalliner und porenfreier Formkörper aus Oxidkeramik durch Verpressen von amorphen Oxidpulvern bei Temperaturen oberhalb des Glaserweichungspunktes und unterhalb der Kristallisationstemperatur und anschließendes Erhitzen der erhaltenen glasigen kompakten Formkörper auf Temperaturen oberhalb der Kristallisationstemperatur, dadurch gekennzeichnet, daß man als amorphe Oxidpulver der Elemente Aluminium, Zirkonium und Silicium oder Mischoxide des Siliciums mit diesen Elementen einsetzt, in denen der Sauerstoff teilweise durch in der Gelstruktur chemisch gebundenen Stickstoff ersetzt ist.

2. Verfahren nach Anspruch 1, dadurch gekennzeichnet, daß im Falle der Einzeloxide 5 bis 30 % des Sauerstoffs durch gebundenen Stickstoff ersetzt sind.

3. Verfahren nach Anspruch 1, dadurch gekennzeichnet, daß im Falle der Mischoxide des Siliciums 50 bis 90 % des Sauerstoffs durch gebundenen Stickstoff ersetzt sind.

Europäisches Patentamt

# EUROPÄISCHER RECHERCHENBERICHT

Nummer der Anmeldung

EP 88 10 6695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 023 869 (SOCIETE EUROPEENNE DES PRODUITS REFRACTAIRES)<br>* Ansrüche 1,2,9; Seite 6, Zeilen 10-26 * | 1-3 | C 04 B 35/00<br>C 04 B 35/18<br>C 04 B 35/10<br>C 04 B 35/48 |
| A | WO-A-8 303 823 (WESTERN ELECTRIC CO., INC.)<br>* Ansprüche 1-7 * | 1 | |
| A | US-A-3 922 333 (K.S. MAZDIYASNI)<br>* Ansprüche 1-11 * | 1 | |
| A | US-A-4 561 872 (J.C. LUONG)<br>* Ansprüche 1,2 * | 1 | |

RECHERCHIERTE SACHGEBIETE (Int. Cl.4)

C 04 B

Der vorliegende Recherchenbericht wurde für alle Patentansprüche erstellt

| Recherchenort | Abschlußdatum der Recherche | Prüfer |
|---|---|---|
| DEN HAAG | 04-08-1988 | LUETHE H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)